(19) **Europäisches Patentamt / European Patent Office / Office européen des brevets**

(11) **EP 2 550 509 B1**

(12) # FASCICULE DE BREVET EUROPEEN

(45) Date de publication et mention de la délivrance du brevet:
**27.07.2016 Bulletin 2016/30**

(21) Numéro de dépôt: **11758725.3**

(22) Date de dépôt: **16.03.2011**

(51) Int Cl.:
*G01D 21/00* (2006.01)    *G01D 9/00* (2006.01)
*G01S 13/00* (2006.01)    *G01S 7/40* (2006.01)
*G01M 5/00* (2006.01)

(86) Numéro de dépôt international:
**PCT/CA2011/050143**

(87) Numéro de publication internationale:
**WO 2011/116479 (29.09.2011 Gazette 2011/39)**

(54) **MÉTHODE ET SYSTÈME DE SYNCHRONISATION TEMPORELLE DE PHASE DE SIGNAUX PROVENANT DE DISPOSITIFS DE MESURE RESPECTIFS**

VERFAHREN UND SYSTEM ZUR ZEITSYNCHRONISATION VON SIGNALPHASEN AUS ENTSPRECHENDEN MESSVORRICHTUNGEN

METHOD AND SYSTEM FOR THE TIME SYNCHRONIZATION OF THE PHASE OF SIGNALS FROM RESPECTIVE MEASUREMENT DEVICES

(84) Etats contractants désignés:
**AL AT BE BG CH CY CZ DE DK EE ES FI FR GB GR HR HU IE IS IT LI LT LU LV MC MK MT NL NO PL PT RO RS SE SI SK SM TR**

(30) Priorité: **24.03.2010 CA 2699596**

(43) Date de publication de la demande:
**30.01.2013 Bulletin 2013/05**

(73) Titulaire: **Hydro-Québec**
**Montréal QC H2Z 1A4 (CA)**

(72) Inventeurs:
• **RIENDEAU, Sylvain**
 **Varennes**
 **Québec J3X 1P7 (CA)**
• **LÉONARD, François**
 **Montréal**
 **Québec H1C 1B1 (CA)**

• **PICHER, Patrick**
 **La Prairie, Québec J5R 6T7 (CA)**
• **GAUVIN, Michel**
 **La Prairie**
 **Québec J5R 6L7 (CA)**
• **BERTRAND, Hugo**
 **Sainte-Julie**
 **Québec J3E 1C8 (CA)**
• **DUPONT, Louis**
 **Sainte-Julie**
 **Québec J3E 3J7 (CA)**

(74) Mandataire: **Kransell & Wennborg KB**
**P.O. Box 27834**
**115 93 Stockholm (SE)**

(56) Documents cités:
WO-A2-2008/043427    FR-A1- 2 889 331
US-A- 5 237 325    US-A1- 2001 043 098
US-A1- 2009 117 928    US-B1- 6 792 063

EP 2 550 509 B1

**Description**

DOMAINE DE L'INVENTION

L'invention porte sur une méthode et un système de synchronisation temporelle de phase de signaux provenant de dispositifs de mesure respectifs.

ÉTAT DE LA TECHNIQUE

Divers systèmes, procédés et techniques nécessitent de réaliser une synchronisation temporelle de mesures de phase entre différents dispositifs de conversion qui ne partagent pas un même signal d'horloge pour leur échantillonnage respectif. Plusieurs des systèmes existants réalisent un échantillonnage par une horloge asservie par une référence commune de temps. Cette approche exige un matériel réalisant une rétroaction (boucle à phase asservie ou "phase-lock-loop") entre la phase de l'horloge d'échantillonnage et la référence temporelle, qui entraîne des coûts. De plus, cette approche limite les stratégies de réduction de bruit puisque le bruit de l'horloge d'échantillonnage et celui de l'horloge de référence sont mélangés avec les erreurs d'asservissement d'horloge.

FR 2 889 331 A1 concerne en particulier un appareil et un procédé d'acquisition de données sismiques, appareil destiné à former un noeud d'un réseau de capteurs sismiques sans fils.

US 5,237,325 A concerne un procédé de saisie et d'évaluation de données de mesure, à canaux multiples, selon lequel des données de mesure analogiques sont relevées, converties en données de mesure numériques, et conservées dans un mémoire pour l'évaluation en ligne ou en différé.

SOMMAIRE

Un objet de l'invention est de proposer une méthode et un système de synchronisation temporelle de phase de signaux provenant de dispositifs de mesure respectifs qui a un faible coût comparativement aux techniques existantes et qui est potentiellement plus précis.

Un autre objet de l'invention est de proposer un remplacement du matériel habituel utilisé pour la synchronisation temporelle de mesures de phase par un étiquetage temporel d'échantillons des signaux de mesure, suivi de calculs corrigeant la fréquence d'échantillonnage, l'étiquetage temporel auquel se référence la phase, ainsi que des valeurs de caractéristique temporelle et de phase de chaque composante d'intérêt dans les signaux.

Selon un aspect de l'invention, il est proposé une méthode de synchronisation temporelle de phase de signaux provenant de dispositifs de mesure respectifs, comprenant les étapes de:

pour chaque dispositif de mesure:

recevoir un signal de synchronisation disponible à chaque dispositif de mesure;
produire un signal d'horloge de référence ayant une cadence plus élevée que le signal de synchronisation;
opérer un compteur en réponse au signal d'horloge de référence pour produire des valeurs de compte;
compléter le signal de synchronisation par les valeurs de compte fournies par le compteur;
sélectionner au moins un bloc temporel ayant un nombre fini d'échantillons dans le signal provenant du dispositif de mesure;
établir des localisations temporelles d'au moins deux échantillons de chaque bloc temporel avec le signal de synchronisation complété;
estimer une valeur de phase et une caractéristique temporelle d'au moins une composante du signal provenant du dispositif de mesure dans chaque bloc temporel;
attribuer à chaque bloc temporel une étiquette temporelle dérivée du signal de synchronisation complété; et
produire des données représentatives de l'au moins une composante, la valeur de phase, la caractéristique temporelle, les localisations temporelles et l'étiquette temporelle pour chaque bloc temporel; et

pour l'ensemble des dispositifs de mesure:

regrouper les données relatives aux blocs temporels ayant des étiquettes temporelles voisines sous des mêmes étiquettes temporelles servant de références temporelles communes; et
calculer des nouvelles valeurs de phase de l'au moins une composante dans les blocs temporels selon les références temporelles communes respectives et les localisations temporelles correspondantes pour la synchronisation temporelle de phase des signaux provenant des dispositifs de mesure.

Selon un autre aspect de l'invention, il est proposé un système de synchronisation temporelle de phase de signaux provenant de dispositifs de mesure respectifs, comprenant:

pour chaque dispositif de mesure, une unité de mesure de phase comprenant:

un récepteur pour recevoir un signal de synchronisation disponible à chaque unité de mesure de phase;
une horloge pour produire un signal d'horloge de référence ayant une cadence plus élevée que le signal de synchronisation; et
une unité de traitement; et

pour l'ensemble des dispositifs de mesure, une unité de traitement de phase comprenant une unité de traitement;

l'unité de traitement de chaque unité de mesure de phase étant configurée pour recevoir le signal provenant du dispositif de mesure correspondant, recevoir le signal de synchronisation, recevoir le signal d'horloge de référence, fournir un compteur opérant en réponse au signal d'horloge de référence pour produire de valeurs de compte, compléter le signal de synchronisation par les valeurs de compte fournies par le compteur, sélectionner au moins un bloc temporel ayant un nombre fini d'échantillons dans le signal provenant du dispositif de mesure, établir des localisations temporelles d'au moins deux échantillons de chaque bloc temporel avec le signal de synchronisation complété, estimer une valeur de phase et une caractéristique temporelle d'au moins une composante du signal provenant du dispositif de mesure dans chaque bloc temporel, et produire des données représentatives de l'au moins une composante, la valeur de phase, la caractéristique temporelle, et les localisations temporelles;
l'unité de traitement de l'un de chaque unité de mesure de phase et de l'unité de traitement de phase étant configurée pour attribuer à chaque bloc temporel une étiquette temporelle dérivée du signal de synchronisation complété, l'étiquette temporelle faisant partie des données relatives à chaque bloc temporel; et
l'unité de traitement de l'unité de traitement de phase étant configurée pour regrouper les données relatives aux blocs temporels ayant des étiquettes temporelles voisines sous des mêmes étiquettes temporelles servant de références temporelles communes, et calculer des nouvelles valeurs de phase de l'au moins une composante dans les blocs temporels selon les références temporelles communes respectives et les localisations temporelles correspondantes pour la synchronisation temporelle de phase des signaux provenant des unités de mesure.

Ce qui suit expose certaines caractéristiques possiblement préférentielles de l'invention qui doivent être considérées de manière non restrictives.

La présente invention vise une synchronisation temporelle de phase entre deux ou plusieurs dispositifs de mesure qui ne partagent pas une même horloge pour leur échantillonnage respectif des signaux à mesurer. Les dispositifs de mesure numérisent un ou plusieurs signaux analogiques par blocs temporels ou en continu. La synchronisation temporelle de la phase consiste à ajuster les valeurs de phase pour qu'elles se réfèrent à une référence temporelle commune entre les différents dispositifs. La synchronisation de la phase concerne une ou plusieurs composantes spectrales. Subsidiairement, une correction de la fréquence de chaque composante peut aussi être réalisée. Une composante spectrale peut être issue d'une transformée de Fourier, d'une analyse en ondelettes ou de tout autre procédé menant à attribuer une valeur de phase à une composante de signal. Les unités de conversion associées aux dispositifs de mesure peuvent être un élément d'un système permanent, portable ou mobile.

Le signal de synchronisation représentant la référence temporelle commune provient préférentiellement d'un récepteur GPS, mais il peut aussi provenir d'une onde porteuse générée localement et transmise par radio, par conduction électrique ou par tout autre moyen (par exemple IEEE 1588) et converti numériquement si requis.

L'invention vise notamment des systèmes, procédés et techniques exploitant un système de mesures distribuées et exigeant une grande précision de la synchronisation de phase mesurée et ce à bas coût matériel. Par exemple, dans le domaine des réseaux de transport électrique, on exige que les PMU ("Phase Measurement Unit") qui réalisent des mesures de phase synchronisées aient un temps de réponse rapide, et ce au détriment du coût et de la précision. En contrepartie, le gain de précision apporté par la méthode selon l'invention et son bas coût permet notamment la surveillance économique de l'état diélectrique de traversées de transformateurs. Dans le domaine industriel, l'asservissement de moteurs ou autres procédés distants peuvent profiter de l'invention afin de synchroniser les différents équipements (les papetières et les convoyeurs notamment). Il s'agit de comparer les phases de différentes mesures telles celles issues d'un capteur angulaire ou de tout autre capteur donnant une information de l'état cyclique (déplacement, vélocité, accélération, compte tour) d'un organe participant au procédé. Dans le domaine de la mesure de vibration, et plus particulièrement de l'analyse modale, sur de grandes étendus comme sur une plate-forme de forage, l'invention permet une synchronisation précise des mesures de phase réalisées par différents dispositifs situés à différents endroits. Dans le domaine de la localisation, tel les sonars et les radars, l'invention permet une estimation précise de l'orientation d'un ou de plusieurs fronts d'onde à partir d'une distribution de récepteurs fixes ou en mouvements.

En somme, la méthode de synchronisation temporelle de phase selon l'invention fait appel à plusieurs unités de mesure de phase PCU ("phase computing unit") et au moins une unité de traitement de phase PPU ("phase processing unit"). Chaque PCU est relié à un (ou plusieurs) dispositif de mesure comme un capteur pouvant faire partie du PCU ou être fixé à l'externe sur un autre équipement, et peut comprendre une unité de traitement, un récepteur GPS fournissant un signal de synchronisation, une horloge de référence et une interface de communication. Le PPU peut comprendre une unité de traitement et une interface de communication. Les étapes suivantes peuvent être réalisées dans chaque PCU:

(a) le signal en provenance du capteur auquel le PCU est associé est préalablement numérisé si nécessaire et acheminé vers son unité de traitement;

(b) l'unité de traitement reçoit un signal de synchronisation du récepteur GPS ainsi qu'un signal de l'horloge de référence;

(c) l'unité de traitement dispose d'un compteur recevant le signal de l'horloge de référence et incrémentant son compte en réponse à un repère temporel tel chaque coup d'horloge dans le signal de l'horloge de référence;

(d) le compteur est de préférence remis à zéro en réponse à un repère temporel dans le signal de synchronisation fourni par le récepteur GPS tel une transition du signal de synchronisation, et l'unité de traitement mémorise la valeur "OPPS" correspondant à une valeur de compte du compteur à l'occurrence du repère temporel dans le signal de synchronisation;

(e) l'unité de traitement attribue une valeur de compte à certains échantillons du signal numérisé;

(f) l'unité de traitement sélectionne un bloc temporel ayant un nombre fini d'échantillons (e.g. compris entre 16 et 65536 échantillons) dans le signal numérisé;

(g) l'unité de traitement retient au moins une et de préférence deux valeurs de compte liées à des échantillons dans le bloc sélectionné ainsi que la valeur OPPS mémorisée;

(h) l'unité de traitement retient une référence temporelle e.g. {heure:minute:seconde} et optionnellement {jour:mois:année} fournie par le récepteur GPS pour au moins un des échantillons du bloc sélectionné;

(i) l'unité de traitement réalise une transformée du signal (temporel) numérisé dans un domaine de représentation où des composantes d'intérêt du signal numérisé sont distinguables;

(j) l'unité de traitement estime et retient une valeur de phase de même qu'une valeur de caractéristique temporelle de une ou plusieurs composantes d'intérêt observées dans le bloc sélectionné, comme sa fréquence, son échelle ou sa périodicité; et

(k) l'unité de traitement transmet au PPU des données représentatives des valeurs retenues ou continue la suite du traitement.

Les étapes suivantes peuvent être réalisées dans chaque PCU ou le PPU:

(l) la valeur OPPS est utilisée pour attribuer des valeurs temporelles respectives aux valeurs de compte qui ont été retenues, liées aux échantillons dans le bloc sélectionné;

(m) à partir des valeurs temporelles des valeurs de compte retenues, l'unité de traitement (du PCU ou du PPU, selon le cas) attribue une valeur de caractéristique temporelle (e.g. fréquence, échelle, périodicité) à chaque composante d'intérêt;

(n) à partir de l'une des valeurs temporelles des valeurs de compte retenues, l'unité de traitement attribue une étiquette temporelle au bloc sélectionné;

(o) si une référence temporelle de la valeur de phase ne correspond pas à une position de l'étiquette temporelle attribuée, à partir des valeurs temporelles des valeurs de compte retenues, l'unité de traitement ajuste la valeur de phase de chaque composante pour qu'elle corresponde à une référence temporelle déterminée par l'étiquette temporelle du bloc sélectionné; et

(p) dans le cas où les étapes précédentes sont réalisées par un PCU, l'unité de traitement du PCU transmet au PPU des données représentatives de l'étiquette temporelle du bloc sélectionné et la valeur de phase de même que la valeur de caractéristique temporelle de l'une ou plusieurs composantes observées dans le bloc sélectionné.

Les étapes suivantes peuvent être réalisées dans le PPU:

(q) parmi les blocs en provenance de plusieurs PCU, l'unité de traitement regroupe ceux qui ont une étiquette temporelle voisine selon un critère de similitude prédéterminé;

(r) l'unité de traitement convertit les valeurs de phase de chaque composante d'intérêt de chaque bloc regroupé selon une référence temporelle commune déterminée par une étiquette temporelle commune attribuée aux blocs regroupés; et

(s) l'unité de traitement fournit l'étiquette temporelle commune, la valeur de phase convertie, de même que la valeur de caractéristique temporelle de l'une ou plusieurs composantes observées dans les blocs regroupés sous l'étiquette temporelle commune, achevant ainsi la synchronisation temporelle de phase des signaux de mesure.

Les PCU et PPU peuvent être un élément permanent, portable ou mobile d'un système. Le PPU peut être intégré à même l'unité de traitement d'un PCU. Plusieurs PCU peuvent se partager un récepteur GPS, une horloge de référence, et/ou une interface de communication.

Dans le cas d'un capteur fournissant un signal analogique, celui-ci passe par un convertisseur analogique à numérique (CAN) qui échantillonne et numérise le signal. Avant d'atteindre l'unité de traitement d'un PCU, le signal peut passer par des circuits de protection et de conditionnement. Le circuit de conditionnement peut comporter un amplificateur, un filtre, et/ou un intégrateur ou dérivateur. Un filtre anti-repliement spectral ("anti-aliasing filter") peut être inclus dans le circuit de conditionnement ou le convertisseur.

Le signal numérisé peut passer par une isolation galvanique avant d'être reçu par l'unité de traitement d'un PCU. Une ou plusieurs sous-unités de numérisation peuvent être reliées à l'unité de traitement d'un PCU par un bus commun.

L'unité de traitement d'un PCU peut attribuer une valeur de compte à tous les échantillons du signal numérisé et non certains échantillons.

Dans le cas d'une numérisation continue du signal provenant d'un capteur, le signal est de préférence découpé en blocs temporels successifs pouvant ou non être superposés temporellement.

Le signal numérisé peut subir une décimation avant qu'un bloc en soit extrait.

L'unité de traitement d'un PCU peut retenir deux valeurs de compte du compteur, consistant par exemple respectivement au compte_0 correspondant au premier échantillon du bloc temporel sélectionné et au compte_N-1 correspondant au dernier échantillon de ce même bloc. Les valeurs compte_0 et compte_N-1 correspondent à des échantillons distants dans le bloc ou dans le voisinage du bloc temporel sélectionné.

Dans le cas où il y aurait une perte temporaire du signal de synchronisation, ce peut être la dernière valeur OPPS qui est retenue par le PCU pour son calcul. Le PCU peut être configuré pour détecter une perte de synchronisation, étiqueter les blocs correspondants et gérer le compteur en conséquence. La perte de synchronisation peut être détectée, par exemple, par un écart de compte de plusieurs écarts-types par rapport à une moyenne roulante des derniers OPPS. Le PCU peut transmettre l'état de synchronisation de chaque bloc au PPU, avisant celui-ci d'une éventuelle perte de synchronisation. Le PCU peut aussi relayer au PPU l'état du récepteur GPS transmis par le récepteur GPS au PCU.

La valeur OPPS peut être utilisée de concert avec la valeur de la référence temporelle fournie par le récepteur GPS pour attribuer une étiquette temporelle aux valeurs de compte du compteur qui ont été retenues. L'étiquette temporelle peut pointer le début, le milieu ou la fin du bloc sélectionné dans le PCU, ou une autre position prédéterminée du bloc si voulu.

La valeur de la référence temporelle fournie par le récepteur GPS peut s'exprimer dans une autre unité temporelle si voulu, e.g. en secondes depuis une date déterminée.

L'unité de traitement d'un PCU peut estimer et retenir aussi une valeur d'amplitude de l'une ou plusieurs composantes observées dans le bloc sélectionné, et la ou les transmettre au PPU pour fins de traitement avec les autres données.

Le regroupement des blocs dans le PPU peut se faire à intervalle temporel donné, se faire en réponse à une commande ou se faire à chaque arrivée d'une nouvelle cohorte de données de la part des PCU.

La référence temporelle commune peut être une valeur prédéterminée, une des valeurs des étiquettes temporelles de la cohorte de données regroupées, ou une étiquette correspondant à une moyenne temporelle des étiquettes temporelles de la cohorte de données regroupées.

Une fenêtre spectrale peut être appliquée sur le bloc sélectionné soumis à la transformée afin de limiter une erreur introduite par une superposition spectrale des composantes. La ou les composantes peuvent être issues d'une transformée de Fourier, d'une analyse en ondelettes, d'une analyse de cyclostationnarité ou de tout autre procédé menant à attribuer une valeur de phase à une composante de signal. Dans les trois cas spécifiés, il sera question respectivement de fréquence, d'échelle et de périodicité comme caractéristique propre à une composante.

Dans le cas d'une localisation radar passive, un bloc peut être sélectionné selon une clé (patron) reconnaissable dans le signal par les différents PCU. Par exemple, la clé peut correspondre à une transitoire RF distincte en provenance d'une station AM, FM, TV ou autres et présentant un bon rapport signal-bruit. Chaque réflexion crée une reproduction de la clé. Dans le PCU, la position temporelle d'une clé ou de sa reproduction est alors établie à deux niveaux, grossièrement selon son enveloppe et finement selon sa phase. Une comparaison des clés capturées par différents PCU permet d'associer les clés issues d'une même émission en d'en déduire les délais et effets Doppler relatifs. Les blocs peuvent être prélevés sur plus d'une bande de signal RF afin d'exploiter la coïncidence statistique des localisations obtenues pour accroitre la robustesse et la précision.

La méthode permet d'augmenter une précision de la synchronisation temporelle de la phase en réduisant une dispersion temporelle du signal de synchronisation, avec les étapes suivantes:

(a) transmettre d'un PCU au PPU et conserver dans le PPU, pour chaque bloc, les valeurs de compte utilisées dans le traitement du bloc, incluant la valeur OPPS;

(b) appliquer un filtre numérique sur les valeurs successives OPPS cumulées par le PPU et ainsi de générer de nouvelles valeurs OPPS;

(c) regénérer les valeurs de compte du compteur du PCU à partir des nouvelles valeurs OPPS filtrées;

(d) utiliser les nouvelles valeurs OPPS pour attribuer des valeurs temporelles aux valeurs de compte qui ont été retenues;

(e) utiliser les anciennes valeurs de compte pour retrouver les valeurs d'origine de phase et de caractéristique temporelle des composantes observées dans les blocs ayant la même étiquette temporelle;

(f) recalculer, à partir des nouvelles valeurs OPPS et de compte calculées en (b) et (d) et des anciennes valeurs retrouvées en (e), les valeurs de phase et de caractéristique temporelle des composantes observées dans les blocs ayant la même étiquette temporelle; et

(g) recalculer l'étiquette temporelle des blocs regroupés en fonction des valeurs OPPS filtrées ou convertir les valeurs de phase en fonction de l'ancienne étiquette temporelle commune.

Les étapes (b), (c), (d) et (e) peuvent être remplacées par une correction de la valeur de phase et de caractéristique temporelle à partir des valeurs issues d'une application d'un filtre numérique, e.g. FIR ("Finite Impulse Response") ou IIR ("Infinite Impulse Response"), sur les valeurs OPPS successives cumulées par le PPU.

L'étape (f) peut être remplacée en réduisant une dérive temporelle du signal de l'horloge de référence avec les étapes suivantes:

(a) générer, par interpolation des valeurs OPPS, une fonction de transfert temporelle qui convertit les nouvelles valeurs de compte issues des valeurs OPPS filtrées en des valeurs de compte qui correspondraient à celles émises par un compteur alimenté par une horloge de fréquence constante affichant une valeur OPPS constante nommé ci-après OPPSP;

(b) appliquer la fonction de transfert aux nouvelles valeurs de compte afin de les corriger;

(c) utiliser la nouvelle valeur OPPSP pour attribuer une valeur temporelle aux valeurs de compte qui ont été retenues; et

(d) recalculer, à partir de la valeur OPPSP et des valeurs temporelles de compte corrigées, des valeurs de phase et de caractéristique temporelle des composantes observées dans les blocs ayant la même étiquette temporelle.

Dans le cas où il y aurait une perte temporaire du signal de synchronisation, le PPU peut reprendre le calcul d'un PCU en considérant les comptes OPPS valides avant et après la perte de synchronisation. Une interpolation linéaire des comptes manquants peut être réalisée avant de procéder au recalcul des étiquettes temporelles, des valeurs de phase et de caractéristique temporelle des composantes observées dans les blocs en provenance du PCU affligé par la perte du signal de synchronisation.

L'interpolation peut s'appliquer sur une série constituée par une somme successive d'une série de valeurs OPPS.

Les valeurs de compte regénérées peuvent ne pas contenir de remise à zéro pour une certaine durée de façon à donner un compte d'une progression continue.

Une composante observée peut être une cyclostationnarité caractérisée par une amplitude, une périodicité et une phase, la périodicité étant traitée telle que l'inverse de la fréquence.

Le PPU peut être configuré pour identifier des mesures susceptibles d'être biaisées en raison par exemple d'un phénomène climatique comme la pluie ou un phénomène ayant un effet similaire sur les mesures, afin par exemple de les rejeter et de ne pas les utiliser dans des calculs servant à établir des diagnostics basés sur la synchronisation temporelle de mesures de phase conformément à l'invention, comme par exemple pour une surveillance de traversées de transformateur (i.e. de conditions de défauts possibles). En pareil cas, le PPU peut réaliser les étapes suivantes:

(a) faire des estimations successives de différences temporelles de différences d'angles de phase d'après les valeurs de phase des composantes des blocs regroupés;

(b) calculer des écarts-types sur les estimations successives; et

(c) invalider une mesure selon que l'écart-type correspondant dépasse un seuil de rejet prédéterminé.

Le PPU peut alors être configuré pour arrêter les calculs servant à établir un diagnostic jusqu'à ce que les mesures soient à nouveau valides, signifiant que le phénomène perturbateur causant des transitoires significatives sur les mesures différentielles est terminé. Les estimations successives peuvent être faites sur des différences temporelles de tangentes de différences d'angles de phase si voulu.

DESCRIPTION BRÈVE DES DESSINS

Une description détaillée des réalisations préférées de l'invention sera donnée ci-après en référence avec les Figures suivantes:

Figure 1 est un diagramme schématique montrant un exemple d'architecture d'un système selon l'invention.

Figure 2 est un diagramme schématique montrant une unité de mesure de phase (PCU) selon l'invention.

Figure 3 est un diagramme schématique montrant une configuration partagée entre différentes unités de mesure de phase (PCU) selon l'invention.

Figure 4 est un diagramme schématique montrant un traitement réalisé par une unité de mesure de phase (PCU) selon l'invention.

Figure 5 est un diagramme schématique montrant une unité de traitement de mesure de phase (PCU) de signaux captés sur une traversée de transformateur selon l'invention.

Figure 6 est un diagramme schématique montrant un système selon l'invention pour une surveillance de traversées de transformateurs.

DESCRIPTION DÉTAILLÉE DES RÉALISATIONS PRÉFÉRÉES

Dans le cadre de la présente divulgation, le terme "caractéristique temporelle" désigne une fréquence, une échelle, une périodicité ou un paramètre similaire d'une composante d'intérêt d'un signal.

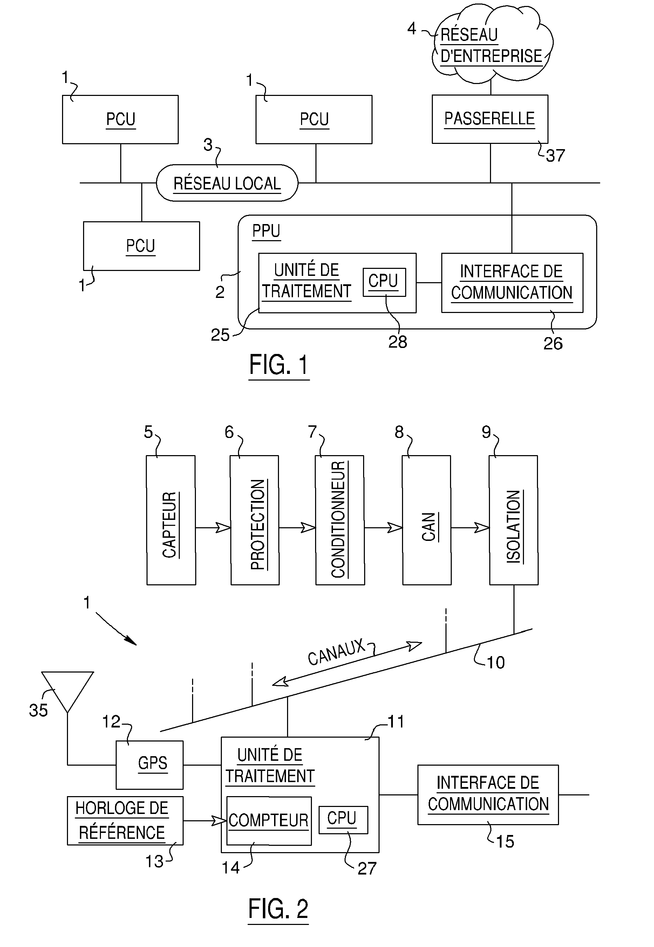

En référence à la Figure 1, il est montré un exemple d'architecture d'un système selon l'invention où plusieurs unités de mesure de phase 1 (ci-après aussi appelé PCU pour "phase computing unit") sont rattachées à une unité de traitement de phase 2 (ci-après aussi appelé PPU pour "phase processing unit") via un réseau de communication local 3 qui peut lui-même être rattaché à un réseau plus étendu 4. D'autres PCU (non illustrés) peuvent venir s'ajouter par le biais du réseau plus étendu 4. Dans une configuration possible du système selon l'invention, le rôle de chaque PCU 1 est d'estimer des valeurs d'amplitude, de phase et de fréquence d'une ou de plusieurs composantes spectrales d'un signal mesuré en associant à ces données une étiquette temporelle, alors que le rôle du PPU 2 est de traiter les données provenant des PCU 1 de manière à les regrouper sous des mêmes étiquettes temporelles afin d'achever la synchronisation temporelle de phase des signaux de mesure et transmettre les données ainsi traitées par exemple pour leur utilisation par un équipement requérant pareilles données ou stockage dans une base de données.

En référence à la Figure 2, un PCU 1 peut être doté d'une unité de numérisation comportant un capteur 5 ou autre dispositif de mesure, intégré ou fixé à l'externe sur un équipement (non illustré), pour produire un signal de mesure en rapport avec une caractéristique à surveiller de l'équipement. Avant une conversion numérique du signal analogique par un convertisseur 8, le signal peut passer par un circuit de protection 6 et un circuit de conditionnement 7 (e.g. amplificateur, filtre, intégrateur, dérivateur...). Un filtre anti-repliement ("anti-aliasing filter") peut être inclus dans le circuit de conditionnement 7 ou le convertisseur 8. Une ou plusieurs unités de numérisation peuvent être reliées à une unité de traitement 11 par un bus commun 10. Préférentiellement, chaque unité de numérisation a une isolation galvanique 9 en regard du bus 10 la reliant au reste du système. Dans le cas d'un capteur à sortie numérique, le convertisseur 8 n'est pas requis. L'unité de traitement 11 reçoit un signal de synchronisation ainsi qu'un signal d'une horloge de référence 13. Le signal de synchronisation provient préférentiellement d'un récepteur GPS 12, mais peut aussi provenir d'une onde porteuse générée localement et transmise par radio, conduction électrique ou tout autre médium de transmission approprié si voulu. Le signal de synchronisation peut prendre la forme d'une impulsion par seconde, ou une autre forme fournissant un repère temporel permettant une synchronisation temporelle dans une unité temporelle préétablie. L'unité de traitement 11 dispose d'un compteur 14 recevant le signal de l'horloge de référence 13 et incrémentant son compte en réponse à un repère temporel tel un coup d'horloge dans le signal de l'horloge 13. L'horloge 13 a des spécifications de stabilité choisies en fonction de l'application visée et de l'environnement du matériel (e.g. température et stabilité de l'alimentation). Le compteur 14 est de préférence remis à zéro à une transition du signal de synchronisation du récepteur GPS 12. Le signal de mesure peut être numérisé en continu ou par blocs temporels. Dans le cas d'une numérisation continue, le signal de mesure est découpé en bloc temporels successifs pouvant ou non être superposés temporellement. Dans une configuration possible d'un PCU 1, l'unité de traitement 11 estime l'amplitude, la fréquence (ou une autre caractéristique temporelle) et la phase d'une ou plusieurs composantes spectrales d'un bloc de signal numérisé et attribue une étiquette temporelle au bloc. Ces opérations peuvent être effectuées par un processeur 27 ou un circuit similaire avec mémoire dans l'unité de traitement 11. Les données résultant du traitement sont transmises au PPU 2 (illustré à la Figure 1) via une interface de communication 15.

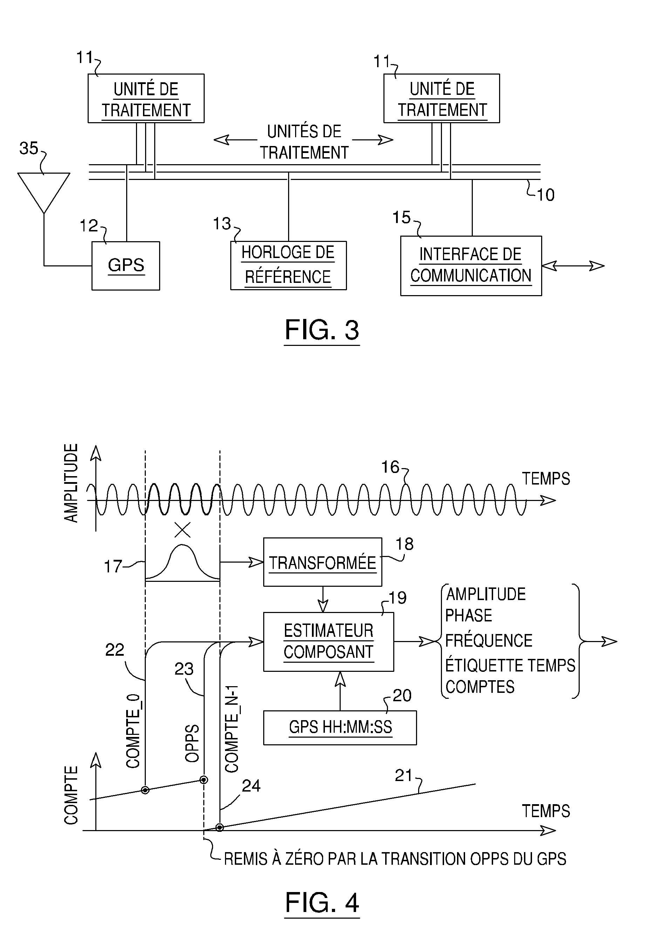

En référence à la Figure 3, plusieurs PCU 1 peuvent partager un même récepteur GPS 12, une même horloge de référence 13 et une même interface de communication 15.

En référence à la Figure 4, il est montré un traitement qu'un PCU 1 (tel qu'illustré à la Figure 1) peut réaliser. Pour des raisons pratiques, le signal échantillonné 16, la fenêtre spectrale 17 et la valeur de comptage 21 sont présentés tels des valeurs continues alors que dans la réalité ce sont des successions de valeurs discrètes. Le signal échantillonné 16 peut correspondre au signal numérisé ou à une décimation du signal numérisé. Afin de limiter l'erreur introduite par la superposition spectrale des composantes ("spectral leakage", cf. F. J. Harris, "On the use of windows for harmonie analysis with the discrete Fourier transform", Proceeding of IEEE, Vol. 66, no. 1, pp. 51-83, 1978), préférentiellement une fenêtre spectrale 17 est appliquée sur le bloc de signal soumis à une transformée 18. La fenêtre spectrale 17 aura de préférence une forme proche d'une gaussienne et affichera un taux élevée de réjection des lobes secondaires. La transformée 18 convertit le signal temporel en une information spectrale où l'énergie d'une tonalité se retrouve regroupée à une fréquence avec une amplitude et une phase. Préférentiellement, cette transformée correspondra à une transformée rapide de Fourier ("FFT"). L'information spectrale est soumise à un estimateur de composant 19. Cet estimateur 19 trouve l'amplitude, la phase et la fréquence en ordre de ligne spectrale d'une ou de plusieurs tonalités. Le PCU 1 peut cesser à ce point le traitement et transmettre au PPU 2 (tel qu'illustré à la Figure 1) les valeurs d'amplitude, de fréquence et de phase ainsi que l'étiquette temporelle 20 du récepteur GPS 12 et trois valeurs du compteur 14 relié à l'horloge de référence 13 (tel qu'illustrée à la Figure 2). Préférentiellement, les trois valeurs de compte 21 du compteur 14 consistent respectivement en un compte_0 22 correspondant au premier échantillon du bloc temporel sélectionné, un compte_N-1 24 correspondant au dernier échantillon de ce même bloc et une valeur OPPS 23 du compteur 14 lors d'une mise à zéro de celui-ci lors de la dernière transition du signal de synchronisation (e.g. une impulsion par seconde) provenant du récepteur GPS 12. L'étiquette temporelle peut pointer le début, le milieu ou la fin du bloc sélectionné, ou un autre point spécifique du bloc si voulu. Il est à noter qu'un autre changement comme une transition de la direction de comptage peut être réalisé au lieu d'une remise à zéro du compteur 14. Ou encore, le compteur 14 peut ne subir aucun changement dans la mesure où la valeur de compte OPPS du compteur 14 marquant un repère temporel fourni par le signal de synchronisation est retenue. En pareil cas, la cadence des repères temporels fournis par le signal de synchronisation sera de préférence plus élevée qu'un cycle de comptage du compteur 14 afin de simplifier le traitement des repères temporels. Seules la valeur de compte OPPS 23 et une autre valeur de compte peuvent être transmises si voulu.

Le traitement qui suit peut être exécuté dans un PCU 1 (tel qu'illustré aux Figures 1 et 2) ou le PPU 2 (tel qu'illustré à la Figure 1). Pour l'estimation de fréquence, l'ajustement de la phase à une référence temporelle donnée ainsi que la génération d'étiquettes temporelles, l'estimateur 19 exploite l'information 20 qui lui est transmise par le récepteur GPS 12 ainsi que trois valeurs de compte 21 du compteur 14 reliée à l'horloge de référence 13. L'information 20 du récepteur GPS 12 correspond à l'étiquette temporelle heure/minute/seconde (et possiblement jour/mois/année) en cours. La valeur OPPS 23 permet de caractériser la fréquence de l'horloge de référence 13 et de donner ainsi une valeur temporelle à chaque compte 21. Par exemple, pour une horloge de référence de 100 MHz, le compte 21 donne une valeur OPPS 23 qui peut varier typiquement de quelques unités autour de 100 millions d'échantillons. À un $k^{\text{ième}}$ compte correspondra alors l'étiquette temporelle

$$t_k = \left\{ Heures : Minutes : Secondes + \frac{k}{OPPS} \right\} \qquad (1)$$

Le cas particulier exposé à la Figure 4 où le compteur 14 est remis à zéro entre le premier et le dernier échantillon du bloc sélectionné est à considérer s'il y a lieu. Dans ce cas, la valeur "seconde" est incrémentée pour le calcul des étiquettes temporelles postérieures à la remise à zéro du compteur 14, et les cas possibles de débordement des valeurs secondes, minutes et heures (et jours, mois, années s'il y a lieu) sont traités. Dans le cas où il y a une perte temporaire du signal de synchronisation, ce peut être la dernière valeur OPPS qui est retenu par le PCU pour son calcul dans l'équation (1) et la valeur k peut dépasser significativement la valeur OPPS de façon à compter plusieurs secondes. La valeur k incluera les "wrap around" du compteur 14 le cas échéant.

Si l'horloge de référence 13 est choisie pour sa stabilité, par contre, les autres horloges dans les différents convertisseurs 8 peuvent dériver substantiellement. Aux valeurs de compte compte_N-1 24 et compte_0 22 correspondent les étiquettes temporelles $t_{\text{compte\_N-1}}$ et $t_{\text{compte\_0}}$ selon la transformation donnée en (1). Les étiquettes temporelles $t_{\text{compte\_N-1}}$ et $t_{\text{compte\_0}}$ permettent de caractériser la fréquence moyenne de chaque convertisseur 8. Ainsi, l'équation

$$f = \frac{i}{t_{compte\_N-1} - t_{compte\_0}} \cdot \frac{N-1}{N} \qquad\qquad (2)$$

où N est le nombre d'échantillons du bloc, permet la conversion en Hertz de la fréquence exprimée en numéro de ligne spectrale i d'une tonalité. Soulignons que dans le cas où l'estimateur 19 a réalisé une interpolation, i n'est pas un nombre entier.

Une valeur de phase n'a de sens que si cette valeur est référencée à une position temporelle. Par exemple, l'algorithme classique de transformée de Fourier référence la phase par rapport au premier échantillon temporel du bloc. Que ce soit dans le PCU 1 ou le PPU 2, il est parfois requis de convertir la valeur de phase d'une tonalité pour une autre référence temporelle. Soit

$$\theta_2 = \theta_1 + 2\pi f \cdot (t_2 - t_1) \text{ en radians} \qquad\qquad (3)$$

la correction de phase appliquée lorsque l'on passe de la référence temporelle $t_1$ à la référence $t_2$, $t_1$ et $t_2$ étant des étiquettes temporelles exprimées en secondes.

Le PCU 1 peut ensuite transmettre au PPU 2 les valeurs d'amplitude, de phase et de fréquence calculées selon (2) ainsi qu'une unique étiquette temporelle calculée selon (1) pour laquelle la phase est référencée selon (3) si requis. Il peut aussi transmettre un état du GPS et un état "en synchro" ou "hors synchro" de la valeur OPPS utilisée dans son calcul. Optionnellement, tel qu'expliqué plus loin, une réduction du bruit du récepteur GPS 12 et une compensation des dérives de l'horloge de référence 13 consistant à ajouter aux résultats d'analyse de chaque bloc les trois valeurs compte_0 22, OPPS 23 et compte_N-1 24 du compteur 14 et de transmettre le tout au PPU 2 peuvent être réalisées.

En ce qui regarde la phase de phénomènes cyclostationnaires, la présente méthode de synchronisation temporelle peut s'appliquer de la manière qui suit. L'objectif est de positionner angulairement ou temporellement, ce qui revient au même, une cyclostationnarité selon une référence temporelle déterminée. Une première manière consiste en l'utilisation dans la méthode de synchronisation d'une transformée en ondelette avec une ondelette similaire à la cyclostationnarité présente. Temporellement, le zéro de phase correspond alors au début d'un cycle alors que la valeur $2\pi(N-1)/N$ correspond à la phase du dernier échantillon du cycle. Une seconde manière fait appel à une analyse harmonique où la cyclostationnarité est considérée comme une somme de composantes harmoniques. La phase de chaque composante est alors prise en compte et synchronisée individuellement par la méthode selon l'invention. De chacune de ces phases on peut déduire une position harmonique et de l'ensemble de ces positions, selon une pondération au choix (amplitude de l'harmonique, puissance, amplitude x fréquence...), on estime le délai de groupe correspondant à l'ensemble d'harmoniques.

En référence à nouveau à la Figure 1, l'unité de traitement de la phase (PPU) 2 comporte une unité de traitement 25 incluant un processeur 28 ou un circuit similaire avec mémoire, qui collecte les données en provenance des différents PCU 1 par le biais d'une interface de communication 26. L'unité de traitement 25 regroupe (ou sélectionne) dans un premier temps toutes les données qui ont une étiquette temporelle voisine. Ce regroupement peut se faire à intervalle temporel donné, se faire en réponse à une commande ou se faire à chaque arrivée d'une nouvelle cohorte de données de la part des PCU 1. La sélection d'étiquettes temporelles voisines assure que les blocs de mesure correspondants traités dans les différents PCU 1 sont approximativement superposés temporellement. Cette superposition permet de rester proche de la précision ultime accessible. La précision ultime accessible se définit comme la borne de Cramer-Rao (cf. C. Rife and R. Boorstyn, "Single-tone parameter estimation from discrete-time observation", IEEE Transactions on Information Theory, IT-20, no. 5, pp.591-598, 1974) pour l'estimation d'une tonalité continue à laquelle il est ajouté (1) la contribution des erreurs d'étiquetage temporel dans l'estimation de la fréquence et de la phase de la tonalité et (2) la contribution des écarts de superposition temporelle entre les blocs des différentes mesures eu égard au fait que la tonalité varie lentement en amplitude et en fréquence. L'unité de traitement 25 du PPU 2 calcule des nouvelles valeurs de phase de chaque mesure selon une référence temporelle commune en appliquant l'équation (3). La référence temporelle commune devra être le plus proche possible des étiquettes temporelles en traitement si l'on veut minimiser les erreurs sur l'ajustement des valeurs de phases. Cette référence temporelle peut être une valeur prédéterminée, une des valeurs des étiquettes de la cohorte en traitement, ou une étiquette correspondant à la moyenne temporelle des étiquettes de la cohorte en traitement.

En référence également à la Figure 2, concernant l'option visant la réduction du bruit du récepteur GPS 12 et la compensation des dérives de l'horloge de référence 13 d'un PCU 1, les trois valeurs compte_0 22, OPPS 23 et compte_N-1 24 du compteur 14 transmises par un PCU 1 peuvent être utilisées pour retrouver les valeurs d'origine $(k, \theta)$ - position d'une valeur de compte et phase. Précisons que le bruit du récepteur GPS 12 et les dérives de l'horloge de référence 13 affichent des distributions spectrales presque à l'opposée: le bruit correspondant aux écarts temporels de la synchronisation donnée par le récepteur GPS 12 est située vers les courtes périodes, de l'ordre de la seconde, alors que les dérives de l'horloge de référence 13 apparaissent importantes pour de plus longues périodes, de l'ordre de plusieurs dizaines de minutes. Un filtre FIR ou IRR peut alors être appliqué sur les valeurs successives OPPS cumulées par le PPU 2 de façon à réduire le bruit du récepteur GPS 12. Le résultat filtré des aléas du récepteur GPS 12 donne une bonne estimation du comportement de l'horloge de référence 13. Il s'agit de regénérer les valeurs de compte du compteur 14 à partir des nouvelles valeurs OPPS filtrées. Pour compenser les dérives de l'horloge de référence 13, il s'agit de trouver la transformation de recalage temporel qui donne un OPPS constant: la courbe temporelle issue d'une interpolation de la sommation des valeurs OPPS est alors vue comme la fonction de transfert inverse de celle recherchée. La fonction de transfert temporelle est appliquée sur les valeurs de compte régénérées. Les équations (1), (2) et (3) sont alors reprises avec les nouvelles valeurs filtrées et corrigées. Précisons que les autres méthodes de synchronisation de phase, tel l'échantillonnage synchrone, ne permettent pas cette correction fine. Cependant, la contrepartie de cette correction est un délai additionnel dans la livraison finale du résultat, ce délai correspondant minimalement à la demi-largeur du filtre FIR appliqué aux valeurs OPPS plus un certain temps de calcul.

Les valeurs de phase synchronisées, comme les valeurs de fréquence corrigées et les valeurs d'amplitude peuvent être transmises à l'externe via l'interface de communication 26. À l'externe, ces données pourront être exploitées dans des contextes aussi variés que la surveillance prévisionnelle, le diagnostic d'équipement ou la commande de processus.

Les fonctionnalités de traitement des données du PPU 2 peuvent être intégrées dans un, plusieurs ou tous les PCU 1 au besoin afin de réduire les coûts matériel et étendre le champ d'application de la méthode. Les fonctionnalités matérielles et les fonctionnalités de traitement des données des unités PCU 1 et PPU 2 peuvent être fusionnées dans une même unité.

À titre d'exemple non limitatif, le système et la méthode selon l'invention permettent la surveillance en ligne de traversées de transformateurs.

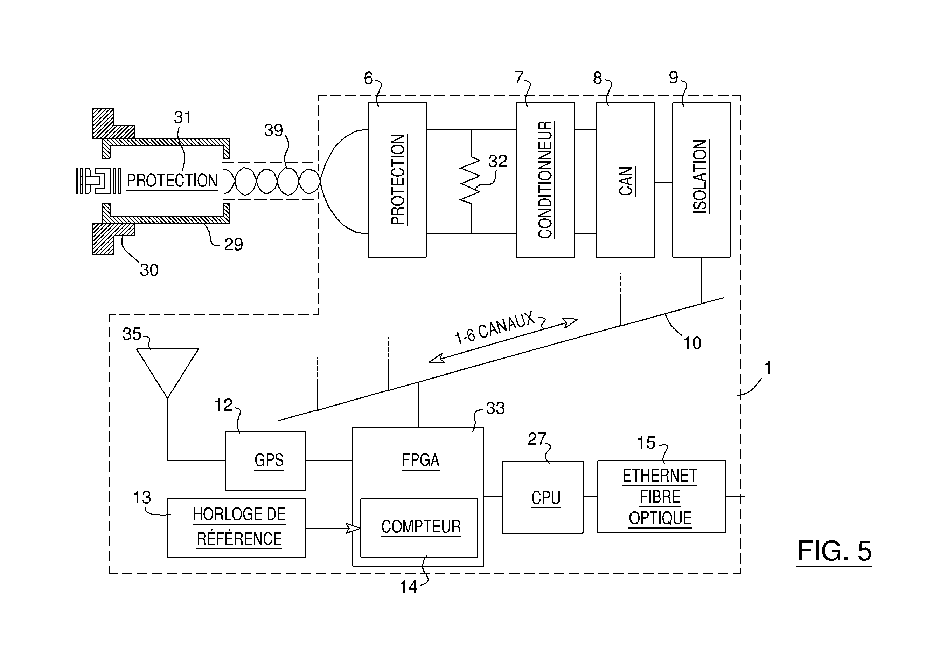

En référence à la Figure 5, il est montré un exemple d'installation d'un système selon l'invention à un capteur 29 d'une traversée 30 de transformateur. Le PCU 1 a dans le cas illustré 6 canaux d'acquisition susceptibles d'être reliés à autant de capteurs si voulu, e.g. via le bus commun 10. Des dispositifs de protection de surtension 31, 6 sont inclus dans le capteur 29 de traversée 30 et à l'entrée de chaque canal, et peuvent être interconnectés par une paire torsadée blindée 39. Un canal est de préférence composé d'un circuit de conditionnement 7 avec shunt 32, d'un convertisseur analogique à numérique sigma-delta 8 (CAN à 24 bits) et un circuit numérique d'isolation 9. Ce montage présente une haute immunité au bruit et à une montée de tension par rapport à la terre, et la synchronisation intrinsèque des convertisseurs 8 à sur-échantillonnage lorsque piloté par une horloge commune. De plus, le convertisseur 8 à sur-échantillonnage permet d'utiliser un filtre anti-repliement plus simple dans le circuit de conditionnement 7, ce qui aide à minimiser les perturbations dans les mesures d'angle de phase et d'amplitude à la fréquence du réseau.

Le système peut être configuré pour calculer la phase et l'amplitude de tous les canaux à chaque minute. Les résultats peuvent être emmagasinés dans un dispositif de stockage local sur le réseau (non illustré) et transférés à l'extérieur du site une fois par jour à une base de données centrale (non illustré) pour analyse.

Une méthode de mesure relative qui utilise deux traversées ou plus en parallèle sur une même phase électrique et qui calcule le rapport des amplitudes et la tangente de l'angle de phase entre les composantes fondamentales des courants d'isolation de traversée est préconisée. L'isolation diélectrique interne de traversées haute tension comporte un empilement de feuillards conducteurs et de feuillards diélectriques intercalés. Une détérioration se caractérise par un endommagement d'un ou plusieurs feuillards diélectriques engendrant ultimement un court-circuit entre feuillards. L'endommagement du diélectrique modifie la relation de phase entre le courant de la composante fondamentale à 60 Hz du réseau (ou une autre fréquence d'opération s'il y a lieu) parcourant l'isolation de la traversée et la tension aux bornes de cette isolation. Les feuillards en court-circuit partiel ou total influent directement sur la valeur de la capacité équivalente de la traversée affectant l'amplitude du courant de la composante à 60 Hz. La surveillance de l'isolation diélectrique interne de traversées implique un suivi de l'évolution temporelle des valeurs de phase et de courant à partir du moment de la mise en service de l'équipement, dans l'hypothèse que les traversées étaient en bon état à cette mise en service. Typiquement, pour une traversée comportant une centaine de feuillards, on attribue un diagnostic de présence de défaut à l'une des traversées lorsque la valeur tangente de l'angle de phase tension/courant (tan$\delta$) varie de 0.005 ou plus. De même, un écart de plus de 1% sur l'évolution temporelle des amplitudes relatives entre deux traversées signifie la présence d'au moins un court-circuit dans les feuillards. La tangente de la différence de phase synchronisée entre deux traversées est sensible à tout changement dans le facteur de puissance/dissipation d'une des traversées, et le rapport des amplitudes est sensible aux changements dans la capacitance d'une des traversées. Si des mesures relatives sont effectuées en utilisant trois éléments de l'équipement en parallèle, alors la traversée défectueuse peut être identifiée. L'asymétrie de tension interphase n'influencera pas l'interprétation, puisque la tension appliquée est essentiellement la même pour tout l'équipement connecté en parallèle. La méthode de la somme des courants de trois traversées reliées aux trois phases, par exemple au primaire d'un transformateur, est moins sensible. Par contre, dans le cas de plusieurs feuillards en court-circuit, cette méthode permet de confirmer ou/et préciser le diagnostic. Par exemple, dans le cas d'une installation ne comprenant que deux transformateurs, la méthode de la somme des courants permet de cibler le transformateur ayant la traversée en défaut si le défaut est prononcé sur l'une des traversées.

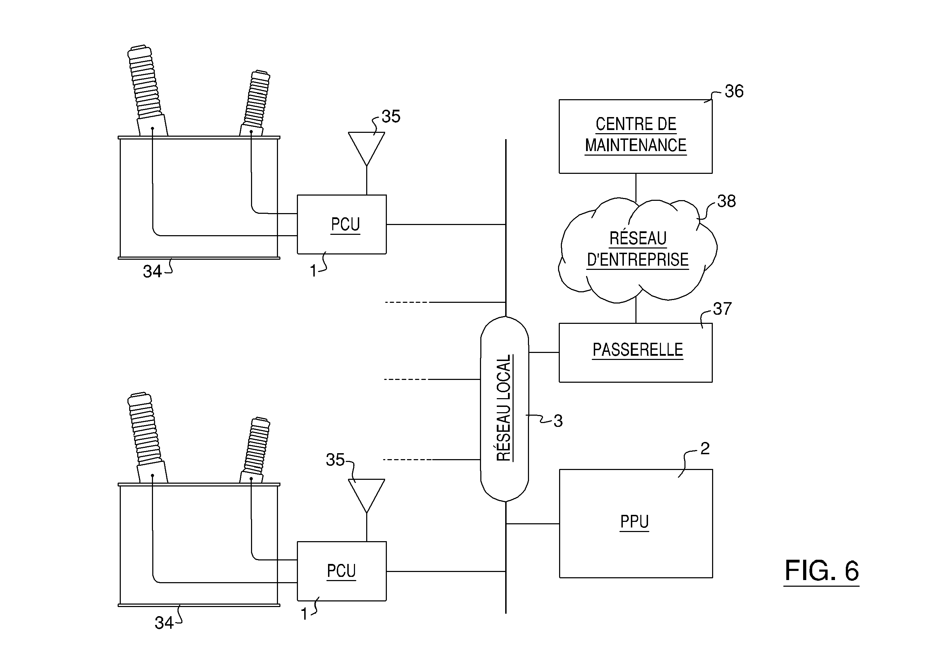

En référence à la Figure 6, l'unité de traitement 11 de chaque PCU 1 (tel qu'illustré à la Figure 2) est configurée pour calculer un phaseur du courant du capteur 29 (tel qu'illustré à la Figure 5) et transférer les mesures étiquetées temporellement par GPS à l'unité de traitement d'un PPU 2 qui dans le cas illustré est une unité de diagnostic de traversées, en utilisant un réseau de communication 3 qui peut être déjà existant dans de telles installations. Chaque PCU 1 est connecté aux capteurs 29 des traversées des transformateurs 34 et installé dans son boîtier. Une antenne GPS 35 est connectée au récepteur de synchronisation (e.g. récepteur GPS 12 tel qu'illustré à la Figure 2) de chaque PCU 1.

Le PPU 2 peut être situé dans un bâtiment de contrôle de sous-station. Il peut recevoir les phaseurs des PCU 1, calculer les Δtanδ (différences temporelles des tangentes de différences d'angles de phase) et rapports d'amplitude, emmagasiner les données, effectuer des analyses de tendance, émettre un diagnostic local et transmettre s'il y a lieu des alarmes à un centre de maintenance 36 e.g. connecté au réseau 3 via une passerelle 37 et un réseau d'entreprise 38. Le PPU 2 peut permettre aussi au personnel d'entretien d'explorer et analyser les données pertinentes à distance.

Le réseau local 3 dans la cour de sous-station connecte le bâtiment de contrôle aux boîtiers des transformateurs haute-tension 34. L'utilisation d'un réseau déjà existant permet une réduction significative dans les coûts de déploiement et d'entretien.

En référence à nouveau à la Figure 5, les valeurs de shunt 32 sont de préférence choisies pour adapter le courant nominal du capteur 29, qui est fonction de la capacité (pF) et de la tension de la traversée, à la plage d'entrée du convertisseur 8. Le PCU 1 peut comporter un FPGA ("Field-Programmable Gate Array") 33 utilisé pour l'étiquetage temporel des échantillons du convertisseur 8 à la résolution de l'horloge de référence 13. Le compteur 14 implémenté dans le FPGA 33 est opéré par l'horloge 13, e.g. à faible dérive en température cadencée à 125 MHz. Le compteur 14 est de préférence remis à zéro par le signal à une impulsion par seconde (1 PPS) du récepteur GPS 12. Les intervalles entre les impulsions sont aussi utilisés pour calculer la fréquence de l'horloge de référence 13. Puisque le bruit du signal fournit par le récepteur GPS 12 n'est pas corrélé avec le bruit de l'horloge de référence 13 utilisée pour l'échantillonnage, des traitements peuvent être réalisés pour réduire les deux bruits tel qu'expliqué précédemment.

En plus de l'étiquetage temporel, le FPGA 33 peut aussi être utilisé comme premier étage du traitement de signal, tampon et interface avec le processeur 27. Le processeur 27 est responsable du calcul d'angle de phase et d'amplitude des signaux étiquetés temporellement provenant des convertisseurs 8. Le PCU 1 transmet les données de phaseurs résultantes à travers son port à fibre optique Ethernet 15 au PPU 2 comme celui montré à la Figure 6.

L'effet d'harmoniques dans la tension peut causer une erreur significative dans les traitements numériques qui sont basées sur une détection de passage à zéro. Dans le présent cas, le convertisseur delta-sigma 8 convertit le signal e.g. à 50k échantillons par seconde. Afin de réduire les exigences de puissance de traitement, le signal numérique peut être filtré par un FIR passe-bas et décimé par dix. Avec un taux d'échantillonnage à 5 kHz, une transformée de Fourier rapide (FFT) traite 83.3 échantillons par cycle. Le nombre maximum de cycles traités par un FFT est fixé par la stabilité de la fréquence du réseau, et le minimum par le type de fenêtre spectrale et le rejet voulu de composantes sous-synchrones.

Le produit de la fenêtre spectrale, le FFT et l'estimation du paramètre du composant spectral sont réalisé par le CPU 27. Puisque l'horloge de référence 13 est plus précise que celle du convertisseur 8, la fréquence d'échantillonnage est estimée à partir de la dernière valeur de compte 1 PPS. La phase est référencée à l'étiquette temporelle générée à partir des valeurs de compte et des données GPS. Les valeurs Δtanδ sont estimées par le PPU 2 (tel qu'illustré à la Figure 6) considérant les étiquettes temporelles et les fréquences d'horloges de référence 13 respectives.

L'utilisation d'une fenêtre spectrale à lobes latéraux à haut taux de rejet permet un rejet dépassant 90 dB de composantes harmoniques et sous-synchrones. La précision d'estimation spectrale est fonction du rapport signal-bruit:

$$SNR = G \cdot \sqrt{N} \cdot a_0 / \sigma_w$$

$$(4)$$

sous un lobe spectral où G représente le facteur de gain de traitement de la fenêtre spectrale, N représente le nombre d'échantillons temporels traités par le FFT, et $a_0 / \sigma_w$ représente le rapport signal-bruit blanc.

En choisissant une fenêtre Blackman-Harris, pour N=4096 échantillons, le rapport signal-bruit sous le lobe spectral est $SNR(dB)=a_0/\sigma_w(dB)+32.6dB$, exprimé en dB. L'écart-type de phase pour une traversée A, exprimée en degrés, est lié par

$$\sigma_{\theta A} > \frac{180°}{\pi} \cdot \frac{1}{SNR}$$

(5)

Dans l'hypothèse de bruit non corrélé entre les mesures, l'écart-type $\Delta\tan\delta$ est la somme quadratique des écarts-types de deux estimations de phase. Puisque $\sigma_{\theta A} \approx \sigma_{\theta B}$, l'écart-type $\Delta\tan\delta$ est

$$\sigma_{\Delta\tan\delta} > \frac{\sqrt{2}}{SNR} \text{ ou } \sigma_{\Delta\tan\delta} > -\left(a_0/\sigma_w(dB) + 29.6\,dB\right)$$

(6)

exprimé en dB. En tenant compte du bruit blanc analogique et le bruit équivalent du convertisseur 8, la précision typique de $\Delta\tan\delta$ excède -100 dB ou 0.001%. Le délai de dispersion correspondant est 27 ns, dans la même plage que le bruit GPS. Cette précision peut être atteinte avec un système galvanique standard. La précision de mesure n'est pas perturbée par l'horloge de référence 13 ou la dérive des fréquences du réseau. La contribution à la dispersion $\Delta\tan\delta$ du PPU 2 est la somme quadratique:

$$\sigma_{BDU}^2 = \sigma_{\Delta\tan\delta}^2 + \sigma_{GPS}^2$$

(7)

où $\sigma_{GPS} = \Delta t_{GPS} \cdot 2\pi\cdot 60Hz$ et $\Delta t_{GPS}$ est le bruit GPS. Dans le cas de bruit non corrélé entre les PCU 1, le bruit GPS est la somme quadratique du bruit provenant de deux récepteurs GPS 12 différents. Des valeurs typiques mesurées amènent une contribution en bruit GPS $\Delta t_{GPS}^2$ de 50 ns ou 0.0018 % dans l'équation (7).

Le PPU 2 peut être configuré pour identifier des mesures susceptibles d'être biaisées en raison par exemple d'un phénomène climatique comme la pluie ou un phénomène ayant un effet similaire sur les mesures, afin par exemple de les rejeter et de ne pas les utiliser dans des calculs servant à établir un diagnostic de surveillance de traversées. Tel qu'indiqué ci-dessus, des transitoires importantes peuvent être observées sur une mesure différentielle $\Delta\tan\delta$ entre une onde à 60 Hz issue d'un coupleur capacitif sur deux traversées. Certaines de ces transitoires peuvent être associées à une présence de pluie. Or, une surveillance automatisée en continue exige une poursuite d'une tendance exempt de transitoires inopportunes telles que celles causées par de la pluie. La méthode proposée fait appel à une stabilité temporelle locale des mesures estimées à partir d'un écart-type sur plusieurs estimations successives de $\Delta\tan\delta$. Une mesure peut être jugée invalide lorsque l'écart-type dépasse un niveau de seuil préétabli. Le niveau de seuil peut être fixé manuellement ou déterminé automatiquement par un simple calcul statistique lorsqu'il y a suffisamment de mesures cumulées. Dans une configuration possible du système selon l'invention, le PPU 2 calcul les valeurs $\Delta\tan\delta$ successives dans l'intervalle de mesure fixé, e.g. de 2 secondes, en réalisant e.g. 36 transformées rapides de Fourier (TRF) de 1024 échantillons avec une superposition de 75% sur la durée de l'intervalle, dans les instants suivant la mise en opération du système. Deux TRF qui se suivent sont donc distantes de 256 échantillons. Les deux TRF extrêmes sont de préférence retirées pour ne conserver que les 34 autres. Étant donné le chevauchement des TRF, les valeurs successives d'estimation de $\Delta\tan\delta$ ne sont pas totalement indépendantes: le poids de l'échantillonnage statistique n'est pas de 34 mais plutôt plus proche de 15. Une durée plus longue ou des TRF plus courtes peuvent être statistiquement avantageuses. En présence d'une précipitation légère, il apparaîtra un scintillement des mesures d'une moyenne nulle, laissant supposer qu'il n'y a pas de film d'eau significatif et que la précipitation s'évapore plus vite que l'apport d'eau. Lorsque la précipitation augmente, une composante continue apparaîtra (i.e. de moyenne nulle) dans le scintillement. Cette composante peut correspondre à une traversée qui serait plus mouillée que l'autre. La distribution statistique de l'écart-type sur la dispersion des mesures instantanées de $\Delta\tan\delta$, calculée avec une application log du calcul de décibel avant binage statistique, présente une superposition de deux types de distribution. La première distribution est gaussienne et correspond au bruit de mesure en l'absence de perturbation. La seconde distribution étant la première vers la droite et correspond aux perturbations attribuées à des précipitations. L'établissement d'un seuil de détection est un compromis entre une sensibilité et une probabilité d'une fausse détection. Le seuil peut être fixé à une distance de deux à trois fois l'écart-type d'une valeur non perturbée. Le maximum de vraisemblance est obtenu pour des manipulations de traitement de signal réalisées dans un espace de représentation où le bruit apparaît gaussien, comme c'est le cas ici. La valeur seuil sera possiblement plusieurs fois plus grande pour des mesures côté basse tension qui se trouvent perturbées par exemple par des onduleurs. Le seuil peut au départ être fixé à une valeur élevée comme valeur initiale dans une moyenne roulante qui ajuste peu à peu la valeur seuil à l'écart-type moyen plus trois fois l'écart-type de l'écart-type estimé à partir des valeurs filtrées. Une borne min/max avec alerte de défaut peut venir limiter l'excursion de la valeur seuil afin de garantir la robustesse. Les résultats d'analyse des mesures peuvent être issus d'une comparaison entre le seuil et le $max\{ETY(\Delta tan\delta), \overline{E}_n\}$ où ETY représente une estimation de $\Delta tan\delta$ et la moyenne roulante $\overline{E}_n$ est simplement une pondération de l'écart-type (ETY) avec un facteur d'oubli de 25%. On peut écrire $\overline{E}_n = 0.7 \cdot \overline{E}_n + 0.25 \cdot ETY_n$ où $ETY_n = ETY(tan(\delta_{n,canalx})\text{-}tan(\delta_{n,canaly}))$. Ce moyen permet à la fois de répondre instantanément à une hausse subite de l'ETY et d'étendre le rejet des valeurs estimées à quelques mesures après un sursaut de l'ETY. On s'assure ainsi de bien nettoyer autour d'un sursaut de l'ETY. Pour une surveillance multi-transformateurs, le dépassement des seuils peut être combiné sur les différentes traversées. La combinaison doit accepter le défaut d'une traversée qui mènerait à un dépassement de seuil pour les calculs impliquant celle-ci. Par exemple, il est possible que des décharges partielles intermittentes dans les feuillards d'une traversée viennent augmenter la dispersion de l'ETY instantané. Un tel événement étant peu probable simultanément dans deux traversées, on peut ajuster la décision à "plus d'une traversée" = précipitations. Il n'y a pas de relations entre les fluctuations des valeurs de rapports signal à bruit et les moyenne de $\Delta tan\delta$ ou les écart-types de $\Delta tan\delta$. Les perturbations sous le pied des composantes 60 Hz sont de faibles amplitudes et comportent une partie aléatoire et une autre déterministe entre deux traversées. Les fluctuations sous le pied de la composante 60 Hz sont en partie corrélées d'une traversée à l'autre pour la même phase: dans la comparaison des $tan\delta$, ce bruit est en bonne partie éliminé par la soustraction tangente à tangente.

La méthode et le système selon l'invention permettent en outre de surveiller l'apparition de fissuration dans une structure comme celle d'une plate-forme de forage qui utilise deux points de mesure ou plus en parallèle installés sur la structure et qui calcule les amplitudes et phases des modes de vibrations qui affectent la structure. L'apparition d'une fissure vient modifier la répartition des ventres et noeuds des modes structuraux de la plate-forme et déplace aussi leurs fréquences. La surveillance de cette répartition permet de détecter les symptômes diagnostiques d'une fissuration. La méthode selon l'invention permet une installation à bas coût non câblée entre les différents points de mesure. Typiquement, les points de mesure comprennent des accéléromètres triaxiaux, des jauges de contrainte et des capteurs de déplacement. Préférentiellement, la synchronisation temporelle sera donnée par GPS. À la sortie du traitement fait par la méthode, les valeurs amplitude, phase et fréquence des modes structuraux peuvent être comparées à un modèle numérique auquel un défaut suspecté est inséré afin d'observer la correspondance entre modes respectifs et déterminer la justesse du défaut suspecté.

Dans un contexte de localisation sonar ou radar semi-passif, les mesures traitées par la méthode selon l'invention peuvent provenir de deux récepteurs passifs ou plus en parallèle, au moins un émetteur et une cible, le traitement calculant alors l'angle de phase entre au moins une composante du signal émis par l'émetteur et réfléchi par la cible et calculant la fréquence fine des composantes émises et réfléchies. Les récepteurs et émetteurs peuvent être radiométriques, ultrasoniques ou sonores. La synchronisation temporelle sera donné par GPS, une onde radio électrique, lumineuse ou par tout autre moyen de communication apte à fournir le signal de synchronisation requis. En sus de l'information apportée par les fronts transitoires des impulsions d'ondes, l'information de phase ajoute de la précision à la localisation respective des émetteurs, récepteurs et cibles. L'information de la fréquence fine ajoute de la précision à l'estimation des vitesses respectives des émetteurs, récepteurs et cibles. La méthode permet une mesure plus précise à plus bas coût et donne accès à l'usage de plus basses fréquences où, sans la méthode proposée, l'usage du front d'onde aurait une précision limitée par la longueur d'onde.

La méthode selon l'invention permet aussi de surveiller simultanément plusieurs points de mesures localisés à des potentiels électriques ne permettant pas de câbler ces points de mesures et nécessitant pour cette raison des PCU 1 sous forme de capteurs autonomes. Par exemple, pour la surveillance de chambres de coupure de disjoncteurs de grande puissance, la mesure vibro-acoustique comme la mesure radioélectrique apportent une information riche en symptômes diagnostiques de l'état électromécanique de l'équipement. Or, dans ces deux cas, le capteur autonome doit être accolé sur la chambre de coupure pour maximiser le rapport du signal d'une chambre de coupure sur celui des autres chambres. Le capteur est donc situé au potentiel de la ligne haute-tension. Outre la question de l'alimentation autonome qui peut se faire de différentes façons, celle de la synchronisation est généralement problématique. La synchronisation de phase selon l'invention permet de résoudre cette problématique. La mesure d'intérêt a lieu lors d'une commutation du disjoncteur. Le capteur autonome est de préférence configuré pour sommeiller entre deux commutations. Pour des raisons d'économie d'énergie, il peut être obligé de prendre une mesure avant l'arrivée du premier signal de synchronisation (le récepteur GPS 12 étant hors tension un peu avant). La méthode peut alors procéder en retenant le compte de deux transitions de synchronisation successives au voisinage temporel du bloc analysé. Précisons que les chambres de coupure de disjoncteurs sont reliées en série entre elles pour un même disjoncteur. Les comportements radioélectrique comme vibro-acoustique de ces chambres sont inter-reliés et nécessitent de comparer de façon synchronisée les signatures, incluant la phase des composantes constituant ces signatures. L'implantation d'une numérisation synchrone dans le temps telle qu'employée dans les PMU n'est pas envisageable pour les capteurs autonomes car un tel moyen ne permettrait pas un sommeil profond du capteur étant donné la synchronisation en temps réel impliquant une consommation électrique de plusieurs ordres de grandeur supérieure au moyen proposé sans compter les coûts matériels aussi supérieurs. Un capteur autonome basé sur un PCU 1 comprend typiquement à l'interne ou à proximité un capteur vibro-acoustique tel un accéléromètre, une antenne de mesure, une antenne de communication, une mesure de température, une mesure de courant, cette dernière pouvant aussi servir comme source d'alimentation. Les traitements effectués par le PPU 2 recevant les données des PCU 1 peuvent revenir à effectuer une postsynchronisation de la phase.

À défaut d'un signal GPS ou autre lien spécifiquement dédié à la synchronisation temporelle fine, il est possible d'exploiter certains signaux ambiants disponibles pour tous les PCU 1, tel une émission radioélectrique (station AM, FM, TV), un signal sonore ou optique. La méthode implique alors de mesurer un signal ambiant commun comme référence pour corriger les aléas de petites amplitudes temporels d'un premier niveau de synchronisation grossier. On parle ici d'un double différentiel, soit une différence entre un canal de référence d'un PCU 1 et ses autres canaux et une différence entre les valeurs émanant de deux PCU 1. Dans une réalisation possible, chaque PCU 1 dédie un de ses canaux analogique à la mesure et au traitement du signal de synchronisation. Un premier moyen de synchronisation grossier, tel une simple communication inter-PCU 1 selon la norme IEEE 1588, réalise un arrimage approximatif des horloges 13 des PCU 1 et opère les compteurs 14. La méthode requiert une création d'un tableau d'étalonnage des délais de réception des PCU 1 pour une position de la source de synchronisation fine. Les valeurs du tableau d'étalonnage peuvent être estimées par un simple calcul de propagation d'onde en considérant les positions respectives PCU 1 et source, les valeurs des délais calculées étant relatives (au PCU 1 le plus proche de la source par exemple). Deux approches équivalentes de correction de phase peuvent être utilisées. Dans un premier cas, on tient compte de la phase mesurée sur le canal de référence de synchronisation pour corriger la phase des composantes des autres canaux dans le PCU 1, auquel cas la correction de phase à apporter dans une comparaison de phase entre deux PCU 1 sera fonction d'une valeur de retard de phase inscrite au tableau d'étalonnage pour les PCU 1 comparés. Dans un deuxième cas, on soustrait les phases de composantes mesurées par deux PCU 1, auquel cas la correction de phase à apporter sera fonction de la différence de phase du signal de synchronisation mesuré par chaque PCU 1 et d'une valeur de retard de phase inscrite au tableau d'étalonnage pour chaque PCU 1. Toutes ces corrections de phase doivent être rapportées dans le domaine temporel selon la fréquence du signal de synchronisation et retransposées dans le domaine de la phase en considérant la fréquence de la composante mesurée sur les canaux comparés. De cette manière, on sauve le coût d'un GPS mais on perd un canal de mesure. Il faut aussi que la cadence d'échantillonnage soit au moins deux fois plus élevée que celle du signal de synchronisation et que l'imprécision de la synchronisation grossière de premier niveau soit inférieure à la période du signal de synchronisation.

Bien que des réalisations de l'invention aient été illustrées dans les dessins ci-joints et décrites ci-dessus, il apparaîtra évident pour les personnes versées dans l'art que des modifications peuvent être apportées à ces réalisations sans s'écarter de l'invention dont l'étendue de protection est définie dans les revendications suivantes.

### Revendications

1.    Méthode de synchronisation temporelle de phase de signaux provenant de dispositifs de mesure respectifs, comprenant les étapes de:

pour chaque dispositif de mesure:

recevoir un signal de synchronisation disponible à chaque dispositif de mesure;
produire un signal d'horloge de référence ayant une cadence plus élevée que le signal de synchronisation;
opérer un compteur en réponse au signal d'horloge de référence pour produire des valeurs de compte;
compléter le signal de synchronisation par les valeurs de compte fournies par le compteur;
sélectionner au moins un bloc temporel ayant un nombre fini d'échantillons dans le signal provenant du dispositif de mesure;
établir des localisations temporelles d'au moins deux échantillons de chaque bloc temporel avec le signal de synchronisation complété;
estimer une valeur de phase et une caractéristique temporelle d'au moins une composante du signal provenant du dispositif de mesure dans chaque bloc temporel;
attribuer à chaque bloc temporel une étiquette temporelle dérivée du signal de synchronisation complété; et
produire des données représentatives de l'au moins une composante, la valeur de phase, la caractéristique temporelle, les localisations temporelles et l'étiquette temporelle pour chaque bloc temporel; et

pour l'ensemble des dispositifs de mesure:

regrouper les données relatives aux blocs temporels ayant des étiquettes temporelles voisines selon un critère de similitude prédéterminé sous des mêmes étiquettes temporelles servant de références temporelles communes; et

calculer des nouvelles valeurs de phase de l'au moins une composante dans les blocs temporels selon les références temporelles communes respectives et les localisations temporelles correspondantes pour la synchronisation temporelle de phase des signaux provenant des dispositifs de mesure.

2. La méthode selon la revendication 1, dans laquelle les valeurs de compte fournies par le compteur sont basées sur un élément cyclique du signal d'horloge de référence, le compteur étant opéré de manière à changer la valeur de compte ou une direction de compte en réponse à un repère temporel dans le signal de synchronisation, les localisations temporelles des échantillons étant relatives aux valeurs de compte correspondantes à l'occurrence du repère temporel.

3. La méthode selon la revendication 1, comprenant de plus l'étape de recevoir un signal temporel disponible à chaque dispositif de mesure, et dans laquelle l'étiquette temporelle attribuée à chaque bloc temporel est basée sur une unité de mesure de temps indiquée par le signal temporel à l'occurrence d'un repère temporel dans le signal de synchronisation.

4. La méthode selon la revendication 3, dans laquelle le signal de synchronisation et le signal temporel découlent d'un même signal.

5. La méthode selon la revendication 1, dans laquelle la caractéristique temporelle de l'au moins une composante du signal est estimée en fonction des localisations temporelles des échantillons du bloc temporel.

6. La méthode selon la revendication 1, dans laquelle la valeur de phase estimée est ajustée en fonction de la localisation temporelle correspondant à l'étiquette temporelle du bloc temporel.

7. La méthode selon la revendication 1, dans laquelle l'au moins une composante est obtenue en réalisant une transformée du signal provenant du dispositif de mesure dans un domaine de représentation où l'au moins une composante est distinguable.

8. La méthode selon la revendication 1, comprenant de plus les étapes de, pour l'ensemble des dispositifs de mesure:

cumuler les valeurs de compte successives des échantillons des blocs temporels coïncidant à des repères temporels dans le signal de synchronisation; et

corriger les valeurs de phase et les caractéristiques temporelles de l'au moins une composante observée dans les blocs ayant la même étiquette temporelle à partir de nouvelles valeurs de compte résultant d'une application d'un filtre numérique sur les valeurs de compte cumulées.

9. La méthode selon la revendication 1, comprenant de plus les étapes de, pour l'ensemble des dispositifs de mesure:

faire des estimations successives de différences temporelles de différences d'angles de phase d'après les valeurs de phase des composantes des blocs regroupés;

calculer des écarts-types sur les estimations successives; et

invalider une mesure selon que l'écart-type correspondant dépasse un seuil de rejet prédéterminé.

10. Système de synchronisation temporelle de phase de signaux provenant de dispositifs de mesure respectifs, comprenant:

pour chaque dispositif de mesure, une unité de mesure de phase comprenant:

un récepteur pour recevoir un signal de synchronisation disponible à chaque unité de mesure de phase;

une horloge pour produire un signal d'horloge de référence ayant une cadence plus élevée que le signal de synchronisation; et

une unité de traitement; et

pour l'ensemble des dispositifs de mesure, une unité de traitement de phase comprenant une unité de traitement;

l'unité de traitement de chaque unité de mesure de phase étant configurée pour recevoir le signal provenant du dispositif de mesure correspondant, recevoir le signal de synchronisation, recevoir le signal d'horloge de référence, fournir un compteur opérant en réponse au signal d'horloge de référence pour produire de valeurs de compte, compléter le signal de synchronisation par les valeurs de compte fournies par le compteur, sélectionner au moins un bloc temporel ayant un nombre fini d'échantillons dans le signal provenant du dispositif de mesure, établir des localisations temporelles d'au moins deux échantillons de chaque bloc temporel avec le signal de synchronisation complété, estimer une valeur de phase et une caractéristique temporelle d'au moins une composante du signal provenant du dispositif de mesure dans chaque bloc temporel, et produire des données représentatives de l'au moins une composante, la valeur de phase, la caractéristique temporelle, et les localisations temporelles;

l'unité de traitement de l'une de chaque unité de mesure de phase et de l'unité de traitement de phase étant configurée pour attribuer à chaque bloc temporel une étiquette temporelle dérivée du signal de synchronisation complété, l'étiquette temporelle faisant partie des données relatives à chaque bloc temporel; et

l'unité de traitement de l'unité de traitement de phase étant configurée pour regrouper les données relatives aux blocs temporels ayant des étiquettes temporelles voisines selon un critère de similitude prédéterminé sous des mêmes étiquettes temporelles servant de références temporelles communes, et calculer des nouvelles valeurs de phase de l'au moins une composante dans les blocs temporels selon les références temporelles communes respectives et les localisations temporelles correspondantes pour la synchronisation temporelle de phase des signaux provenant des unités de mesure.

11. Le système selon la revendication 10, dans lequel les valeurs de compte fournies par le compteur sont basées sur un élément cyclique du signal d'horloge de référence, le compteur étant opéré de manière à changer la valeur de compte ou une direction de compte en réponse à un repère temporel dans le signal de synchronisation, les localisations temporelles des échantillons étant relatives aux valeurs de compte correspondantes à l'occurrence du repère temporel.

12. Le système selon la revendication 10, dans lequel l'unité de traitement de chaque unité de mesure de phase est configurée pour recevoir un signal temporel disponible à chaque dispositif de mesure, et l'étiquette temporelle attribuée à chaque bloc temporel est basée sur une unité de mesure de temps indiquée par le signal temporel à l'occurrence d'un repère temporel dans le signal de synchronisation.

13. Le système selon la revendication 12, dans lequel le signal de synchronisation et le signal temporel découlent d'un même signal.

14. Le système selon la revendication 10, dans lequel la caractéristique temporelle de l'au moins une composante du signal est estimée en fonction des localisations temporelles des échantillons du bloc temporel.

15. Le système selon la revendication 10, dans lequel la valeur de phase estimée est ajustée en fonction de la localisation temporelle correspondant à l'étiquette temporelle du bloc temporel.

16. Le système selon la revendication 10, dans lequel l'unité de traitement de chaque unité de mesure de phase est configurée pour obtenir l'au moins une composante en réalisant une transformée du signal provenant du dispositif de mesure dans un domaine de représentation où l'au moins une composante est distinguable.

17. Le système selon la revendication 10, dans lequel un groupe d'unités de mesure de phase se partagent au moins un d'un même récepteur et d'une même horloge via un bus commun entre l'au moins un d'un même récepteur et d'une même horloge et les unités de traitement du groupe d'unités de mesure de phase.

18. Le système selon la revendication 10, dans lequel chaque unité de mesure de phase et l'unité de traitement de phase comprennent des interfaces de communication respectives se connectant à un réseau.

19. Le système selon la revendication 10, dans lequel le récepteur est un récepteur GPS.

20. Le système selon la revendication 10, comprenant de plus, pour chaque unité de mesure de phase, au moins un de:

un filtre pour filtrer les signaux provenant des dispositifs de mesure;

un amplificateur pour amplifier les signaux provenant des dispositifs de mesure;
un intégrateur ou un dérivateur pour intégrer ou dériver les signaux provenant des dispositifs de mesure;
un décimateur pour décimer les signaux provenant des dispositifs de mesure;
pour chaque dispositif de mesure fournissant un signal analogique, un convertisseur analogique à numérique pour numériser le signal analogique provenant du dispositif de mesure en un signal numérique; et
une isolation galvanique pour isoler l'unité de mesure de phase du dispositif de mesure correspondant.

21. Le système selon la revendication 10, dans lequel chaque référence temporelle commune est définie par une valeur prédéterminée associé aux blocs regroupés, une des étiquettes temporelles des blocs regroupés, ou une étiquette correspondant à une moyenne temporelle des étiquettes temporelles des blocs regroupés.

22. Le système selon la revendication 10, dans lequel l'unité de traitement de l'unité de traitement de phase est configurée pour:

faire des estimations successives de différences temporelles de différences d'angles de phase d'après les valeurs de phase des composantes des blocs regroupés;
calculer des écarts-types sur les estimations successives; et
invalider une mesure selon que l'écart-type correspondant dépasse un seuil de rejet prédéterminé.

**Patentansprüche**

1. Verfahren zur Zeitsynchronisation von Signalphasen, die von jeweiligen Messvorrichtungen kommen, umfassend die folgenden Schritte:

Empfang eines Synchronisationssignals, das an jeder Messvorrichtung verfügbar ist;
Erzeugung eines Referenzzeitsignals mit einer höheren Kadenz als das Synchronisationssignal;
Betreiben eines Zählers als Antwort auf das Referenzzeitsignal, um Zählwerte zu erzeugen,
Ergänzung des Synchronisationssignals durch die vom Zähler gelieferten Zählwerte;
Auswahl mindestens einen Zeitblocks mit einer endlichen Anzahl von Proben in dem von der Messvorrichtung kommenden Signal;
Herstellung von Zeitlokalisierungen von mindestens zwei Proben jedes Zeitblocks mit dem ergänzten Synchronisationssignal;
Zuteilung zu jedem Zeitblock einer von dem ergänzten Synchronisationssignal abgeleiteten Zeitetikette; und
Erzeugung aus den repräsentativen Daten der mindestens einen Komponente des Phasenwerts, des Zeitmerkmals, der Zeitlokalisierungen und der Zeitetikette für jeden Zeitblock; und
für die Gesamtheit der Messvorrichtungen:

Zusammenfassung der Daten betreffend die Zeitblöcke mit ähnlichen Zeitetiketten nach einem vorbestimmten Ähnlichkeitskriterium unter denselben Zeitetiketten, die als gemeinsame Zeitreferenzen dienen; und
Berechnung der neuen Phasenwerte der mindestens einen Komponente in den Zeitblöcken nach den jeweiligen verschiedenen gemeinsamen Zeitreferenzen und den entsprechenden Zeitlokalisierungen für die Zeitsynchronisation einer Phase der von den Messvorrichtungen kommenden Signale.

2. Verfahren nach Anspruch 1, bei dem die von dem Zähler gelieferten Zählwerte auf einem zyklischen Element des Referenzzeitsignals basieren, wobei der Zähler derart betrieben wird, dass der Zählwert oder eine Zählrichtung als Antwort auf einen Zeitbezugspunkt im Synchronisationssignal geändert wird, wobei die Zeitlokalisierungen der Proben auf die entsprechenden Zählwerte, im vorliegenden Fall des Zeitbezugspunktes, bezogen sind.

3. Verfahren nach Anspruch 1, ferner umfassend den Schritt des Empfangs eines an jeder Messvorrichtung verfügbaren Zeitsignals, und bei der die Zeitetikette, die jedem Zeitblock zugeordnet ist, auf einer Zeitmesseinheit basiert, die vom Zeitsignal, im vorliegenden Fall eines Zeitbezugspunktes im Synchronisationssignal, angegeben ist.

4. Verfahren nach Anspruch 3, bei dem das Synchronisationssignal und das Zeitsignal von einem selben Signal ausgehen.

5. Verfahren nach Anspruch 1, bei dem das Zeitmerkmal der mindestens einen Komponente des Signals in Abhängigkeit von den Zeitlokalisierungen der Proben des Zeitblocks geschätzt wird.

**6.** Verfahren nach Anspruch 1, bei dem der geschätzte Phasenwert in Abhängigkeit von der Zeitlokalisierung entsprechend der Zeitetikette des Zeitblocks eingestellt wird.

**7.** Verfahren nach Anspruch 1, bei dem die mindestens eine Komponente erhalten wird, wobei eine Transformierte des von der Messvorrichtung kommenden Signals in einem Darstellungsbereich, in dem mindestens eine Komponente zu unterscheiden ist, hergestellt wird.

**8.** Verfahren nach Anspruch 1, ferner umfassend für die Gesamtheit der Messvorrichtungen die folgenden Schritte:

Kumulieren der aufeinanderfolgenden Zählwerte der Proben der Zeitblöcke, die mit Zeitbezugspunkten in dem Synchronisationssignal zusammenfallen; und
Korrigieren der Phasenwerte und der Zeitmerkmale der mindestens einen Komponente, die in den Blöcken beobachtet wurde, die dieselbe Zeitetikette haben, auf Basis von neuen Zählwerten, die sich aus einer Anwendung eines digitalen Filters an den kumulierten Zählwerten ergeben.

**9.** Verfahren nach Anspruch 1, ferner umfassend für die Gesamtheit der Messvorrichtungen die folgenden Schritte:

Durchführen von aufeinanderfolgenden Schätzungen von Zeitdifferenzen von Phasenwinkeldifferenzen nach den Phasenwerten der Komponenten der zusammengefassten Blöcke;
Berechnen der typischen Abweichungen von den aufeinanderfolgenden Schätzungen; und
Aufhebung einer Messung, je nachdem, ob eine typische Abweichung eine vorbestimmte Ablehnungsschwelle überschreitet.

**10.** System zur Zeitsynchronisation von Signalphasen, die von jeweiligen Messvorrichtungen kommen, umfassend:

für jede Messvorrichtung eine Phasenmesseinheit, umfassend:

einen Empfänger, um ein Synchronisationssignal zu empfangen, das an jeder Phasenmesseinheit verfügbar ist;
einen Zeitmesser, um ein Referenzzeitsignal mit einer höheren Kadenz als das Synchronisationssignal zu erzeugen; und
eine Verarbeitungseinheit; und
für die Gesamtheit der Messvorrichtungen eine Phasenverarbeitungseinheit, umfassend eine Verarbeitungseinheit;
wobei die Verarbeitungseinheit jeder Phasenmesseinheit ausgeführt ist, um das von der entsprechenden Messvorrichtung kommende Signal zu empfangen, das Synchronisationssignal zu empfangen, das Referenzzeitsignal zu empfangen, einen Zähler zu liefern, der als Antwort auf das Referenzzeitsignal wirkt, um Zählwerte zu erzeugen, das Synchronisationssignal durch die vom Zähler gelieferten Zählwerte zu ergänzen, mindestens einen Zeitblock auszuwählen, der eine endliche Anzahl von Proben in dem von der Messvorrichtung kommenden Signal hat, Zeitlokalisierungen mindestens zweiter Proben jedes Zeitblocks mit dem ergänzten Synchronisationssignal zu erstellen, einen Phasenwert und ein Zeitmerkmal mindestens einer Komponente des von der Messvorrichtung in jedem Zeitblock kommenden Signals zu schätzen und Daten zu erzeugen, die für die mindestens eine Komponente, den Phasenwert, das Zeitmerkmal und die Zeitlokalisierungen repräsentativ sind;
wobei die Verarbeitungseinheit der einen jeder Phasenmesseinheit und der Phasenverarbeitungseinheit ausgeführt ist, um jedem Zeitblock eine Zeitetikette zuzuordnen, die von dem ergänzten Synchronisationssignal abgeleitet wurde, wobei die Zeitetikette Teil der Daten betreffend jeden Zeitblock ist; und
wobei die Verarbeitungseinheit der Phasenverarbeitungseinheit ausgeführt ist, um die Daten betreffend die Zeitblöcke mit ähnlichen Zeitetiketten nach einem vorbestimmten Ähnlichkeitskriterium unter denselben Zeitetiketten,, die als gemeinsame Zeitreferenzen dienen, zusammenzufassen, und neue Phasenwerte der mindestens einen Komponente in den Zeitblöcken nach den jeweiligen gemeinsamen Zeitreferenzen und den entsprechenden Zeitlokalisierungen für die Zeitsynchronisation von Signalphasen, die von den Messvorrichtungen kommen, zu berechnen.

**11.** System nach Anspruch 10, bei dem die von dem Zähler gelieferten Zählwerte auf einem zyklischen Element des Referenzzeitsignals basieren, wobei der Zähler derart betrieben wird, dass der Zählwert oder eine Zählrichtung als Antwort auf einen Zeitbezugspunkt in dem Synchronisationssignal geändert wird, wobei die Zeitlokalisierungen der Proben die entsprechenden Zählwerte, im vorliegenden Fall des Zeitbezugspunktes, betreffen.

**12.** System nach Anspruch 10, bei dem die Verarbeitungseinheit jeder Phasenmesseinheit ausgeführt ist, um ein an jeder Messvorrichtung verfügbares Zeitsignal zu empfangen, und die jedem Zeitblock zugeordnete Zeitetikette auf einer Zeitmesseinheit basiert, die vom Zeitsignal, im vorliegenden Fall eines Zeitbezugspunktes im Synchronisationssignal, angegeben ist.

**13.** System nach Anspruch 12, bei dem das Synchronisationssignal und das Zeitsignal von einem selben Signal ausgehen.

**14.** System nach Anspruch 10, bei dem das Zeitmerkmal der mindestens einen Komponente des Signals in Abhängigkeit von den Zeitlokalisierungen der Proben des Zeitblocks geschätzt wird.

**15.** System nach Anspruch 10, bei dem der geschätzte Phasenwert in Abhängigkeit von der Zeitlokalisierung entsprechend der Zeitetikette des Zeitblocks eingestellt wird.

**16.** System nach Anspruch 10, bei dem die Verarbeitungseinheit jeder Phasenmesseinheit ausgeführt ist, um die mindestens eine Komponente zu erhalten, wobei eine Transformierte des von der Messvorrichtung kommenden Signals in einem Darstellungsbereich, in dem die mindestens eine Komponente unterscheidbar ist, hergestellt wird.

**17.** System nach Anspruch 10, bei dem sich eine Gruppe von Phasenmesseinheiten mindestens einen eines selben Empfängers und eines selben Zeitmessers über einen gemeinsamen Bus zwischen dem mindestens einen eines selben Empfängers und eines selben Zeitmessers und den Verarbeitungseinheiten der Gruppe von Phasenmesseinheiten teilt.

**18.** System nach Anspruch 10, bei dem jede Phasenmesseinheit und die Phasenverarbeitungseinheit jeweilige Kommunikationsschnittstellen umfassen, die sich an ein Netz anschließen.

**19.** System nach Anspruch 10, bei dem der Empfänger ein GPS-Empfänger ist.

**20.** System nach Anspruch 10, ferner umfassend für jede Phasenmesseinheit mindestens einen von:

einem Filter, um die von den Messvorrichtungen kommenden Signale zu filtern,
einen Verstärker, um die von den Messvorrichtungen kommenden Signale zu verstärken,
einen Integrator oder Ableiter, um die von den Messvorrichtungen kommenden Signale zu integrieren oder abzuleiten,
einen Dezimierer, um die von den Messvorrichtungen kommenden Signale zu dezimieren,
für jede Messvorrichtung, die ein analoges Signal liefert, einen Analog-Digital-Umsetzer, um das von der Messvorrichtung kommende analoge Signal in ein digitales Signal zu digitalisieren, und
eine galvanische Isolierung, um die Phasenmesseinheit von der entsprechenden Messvorrichtung zu isolieren.

**21.** System nach Anspruch 10, bei dem jede gemeinsame Zeitreferenz durch einen vorbestimmten Wert definiert ist, der den zusammengefassten Blöcken, einer der Zeitetiketten der zusammengefassten Blöcke oder einer Etikette entsprechend einem Zeitdurchschnitt der Zeitetiketten der zusammengefassten Blöcke zugeordnet ist.

**22.** System nach Anspruch 10, bei dem die Verarbeitungseinheit der Phasenverarbeitungseinheit dazu vorgesehen ist:

aufeinanderfolgende Schätzungen von Zeitdifferenzen von Phasenwinkeldifferenzen nach den Phasenwerten der Komponenten der zusammengefassten Blöcke durchzuführen;
typische Abweichungen von den aufeinanderfolgenden Schätzungen zu berechnen, und
eine Messung aufzuheben, je nachdem, ob die entsprechende typische Abweichung eine vorbestimmte Ablehnungsschwelle überschreitet.

**Claims**

**1.** A method for time synchronization of phase of signals from respective measurement devices, the method comprising the steps of:

for each measurement device:

receiving a synchronization signal available to each measurement device;
producing a reference clock signal having a higher rate than the synchronization signal;
operating a counter in response to the reference clock signal to produce count values;
completing the synchronization signal with the count values provided by the counter;
selecting at least one time block having a finite number of samples in the signal from the measurement device;
establishing time locations of at least two samples of each time block with the completed synchronization signal;
estimating a phase value and a temporal characteristic of at least one component of the signal from the measurement device in each time block;
assigning a time tag derived from the completed synchronization signal to each time block; and
producing data representative of the at least one component, the phase value, the temporal characteristic, the time locations and the time tag for each time block; and for all the measurement devices:

regrouping the data relative to the time blocks having like time tags according to a predetermined similarity criterion under same time tags used as common time references; and
calculating new phase values of the at least one component in the time blocks according to the respective common time references and the corresponding time locations for the time synchronization of phase of the signals from the measurement devices.

2. The method according to claim 1, wherein the count values provided by the counter are based on a cyclic element of the reference clock signal, the counter being operated to change the count value or a counting direction in response to a time mark in the synchronization signal, the time locations of the samples being relative to the corresponding count values at occurrence of the time mark.

3. The method according to claim 1, further comprising the step of receiving a time signal available to each measurement device, and wherein the time tag assigned to each time block is based on a time measurement unit indicated by the time signal at occurrence of a time mark in the synchronization signal.

4. The method according to claim 3, wherein the synchronization signal and the time signal derive from a same signal.

5. The method according to claim 1, wherein the temporal characteristic of the at least one component of the signal is estimated as function of the time locations of the samples of the time block.

6. The method according to claim 1, wherein the estimated phase value is adjusted as function of the time location corresponding to the time tag of the time block.

7. The method according to claim 1, wherein the at least one component is obtained by carrying out a transform of the signal from the measurement device in a representation domain where the at least one component is distinguishable.

8. The method according to claim 1, further comprising the steps of, for all the measurement devices:

gathering the successive count values of the samples of the time blocks coinciding to time marks in the synchronization signal; and
correcting the phase values and the temporal characteristics of the at least one component observed in the blocks having the same time tag from new count values resulting from an application of a digital filter on the gathered count values.

9. The method according to claim 1, further comprising the steps of, for all the measurement devices:

making successive estimations of time differences of phase angle differences based on the phase values of the components of the regrouped blocks;
calculating standard deviations on the successive estimations; and
invalidating a measurement depending on whether the corresponding standard deviation exceeds a predetermined rejection threshold.

10. A system for time synchronization of phase of signals from respective measurement devices, the system comprising:

for each measurement device, a phase measurement unit comprising:

a receiver that receives a synchronization signal available to each phase measurement unit;

a clock that produces a reference clock signal having a higher rate than the synchronization signal; and
a processing unit; and

for all the measurement devices, a phase processing unit comprising a processing unit;

the processing unit of each phase measurement unit being configured to receive the signal from the corresponding measurement device, receive the synchronization signal, receive the reference clock signal, provide a counter operating in response to the reference clock signal to produce count values, complete the synchronization signal with the count values provided by the counter, select at least one time block having a finite number of samples in the signal from the measurement device, establish time locations of at least two samples of each time block with the completed synchronization signal, estimate a phase value and a temporal characteristic of at least one component of the signal from the measurement device in each time block, and produce data representative of the at least one component, the phase value, the temporal characteristic, and the time locations;
the processing unit of one of each phase measurement unit and the phase processing unit being configured to assign a time tag derived from the completed synchronization signal to each time block, the time tag forming part of the data relative to each time block; and
the processing unit of the phase processing unit being configured to regroup the data relative to the time blocks having like time tags according to a predetermined similarity criterion under same time tags used as common time references, and calculate new phase values of the at least one component in the time blocks according to the respective common time references and the corresponding time locations for the time synchronization of phase of the signals from the measurement devices.

11. The system according to claim 10, wherein the count values provided by the counter are based on a cyclic element of the reference clock signal, the counter being operated to change the count value or a counting direction in response to a time mark in the synchronization signal, the time locations of the samples being relative to the corresponding count values at occurrence of the time mark.

12. The system according to claim 10, wherein the processing unit of each phase measurement unit is configured to receive a time signal available to each measurement device, and the time tag assigned to each time block is based on a time measurement unit indicated by the time signal at occurrence of a time mark in the synchronization signal.

13. The system according to claim 12, wherein the synchronization signal and the time signal derive from a same signal.

14. The system according to claim 10, wherein the temporal characteristic of the at least one component of the signal is estimated as function of the time locations of the samples of the time block.

15. The system according to claim 10, wherein the estimated phase value is adjusted as function of the time location corresponding to the time tag of the time block.

16. The system according to claim 10, wherein the processing unit of each phase measurement unit is configured to obtain the at least one component by carrying out a transform of the signal from the measurement device in a representation domain where the at least one component is distinguishable.

17. The system according to claim 10, wherein a group of the phase measurement units share at least one of a same receiver and a same clock via a common bus between the at least one of the same receiver and the same clock and the processing units of the group of the phase measurement units.

18. The system according to claim 10, wherein each phase measurement unit and the phase processing unit comprise respective communication interfaces connecting to a network.

19. The system according to claim 10, wherein the receiver is a GPS receiver.

20. The system according to claim 10, further comprising, for each phase measurement unit, at least one of:

a filter that filters the signals from the measurement devices;

an amplifier that amplifies the signals from the measurement devices;

an integrator or a differentiator that integrates or differentiates the signals from the measurement devices;

a decimator that decimates the signals from the measurement device;

for each measurement unit providing an analog signal, an analog-to-digital converter that digitizes the analog signal from the measurement device into a digital signal; and

a galvanic insulation that insulates the phase measurement unit from the corresponding measurement device.

21. The system according to claim 10, wherein each common time reference is defined by a predetermined value associated to the regrouped blocks, one of the time tags of the regrouped blocks, or a tag corresponding to a temporal mean of the time tags of the regrouped blocks.

22. The system according to claim 10, wherein the processing unit of the phase processing unit is configured to:

make successive estimations of time differences of phase angle differences based on the phase values of the components of the regrouped blocks;

calculate standard deviations on the successive estimations; and

invalidate a measurement depending on whether the corresponding standard deviation exceeds a predetermined rejection threshold.

FIG. 1

FIG. 2

**FIG. 3**

**FIG. 4**

FIG. 5

EP 2 550 509 B1

FIG. 6

26

## RÉFÉRENCES CITÉES DANS LA DESCRIPTION

*Cette liste de références citées par le demandeur vise uniquement à aider le lecteur et ne fait pas partie du document de brevet européen. Même si le plus grand soin a été accordé à sa conception, des erreurs ou des omissions ne peuvent être exclues et l'OEB décline toute responsabilité à cet égard.*

**Documents brevets cités dans la description**

- FR 2889331 A1
- US 5237325 A

**Littérature non-brevet citée dans la description**

- **F. J. HARRIS.** On the use of windows for harmonie analysis with the discrete Fourier transform. *Proceeding of IEEE,* 1978, vol. 66 (1), 51-83
- **C. RIFE ; R. BOORSTYN.** Single-tone parameter estimation from discrete-time observation. *IEEE Transactions on Information Theory,* 1974, vol. IT-20 (5), 591-598